# EUROPEAN PATENT SPECIFICATION

(11) **EP 0 666 192 B1**
(45) Date of publication and mention of the grant of the patent: **21.04.1999**
(21) Application number: 94300823.5
(22) Date of filing: 04.02.1994
(51) Int. Cl.: B60K 6/04, B60L 11/14

(54) **Different coupling and compounding power system of electric transmission storing type**
Verschiedene Kopplungs- und Verbund- Leistungssysteme vom elektrischen Übertragungs- und Speichertyp
Différents systèmes de couplage et d'hybridation de puissance du type à transmission et stockage électriques

(43) Date of publication of application: 09.08.1995
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Arthur, Bryan Edward

(56) References cited:
- WO-A-82/00928
- WO-A-91/08919
- WO-A-92/20544
- DE-A- 3 140 492
- GB-A- 993 185
- US-A- 4 562 894
- US-A- 5 120 282
- ÖZE, vol.5, May 1989 pages 179 - 194 A.GAHLEITNER 'Stand der Entwicklung von Elektro-Strassenfahrzeugen 1989. Allgemeine Problemkreise, Antriebsysteme, Energiespeicher .'

## Description

### SUMMARY OF THE INVENTION

Differential coupling and compounding drive and transmission systems are used to supply rotary drive to vehicles, ships, air craft, and other mechanical devices (or other industrial equipment). Such a system is directly connected to an input shaft of an electric motor through a rotary output shaft of an internal combustion engine (or other gyroscopic power source) or through a transmission gear, belt, chain, or coupling.

WO 92/20544 (Audi) discloses a four wheel drive hybrid vehicle with an internal combustion engine and an electric drive system in which the internal combustion engine is fitted at the front, and all four wheels are driven. The rear wheels are driven by a propeller shaft and an electric motor is associated with the propeller shaft and takes the form of a permanent magnet synchronous motor. The rotor of the motor is a part of the propeller shaft. This supplies permanent four wheel drive during propulsion by either the internal combustion engine or the electric drive system.

According to a first aspect of the invention, a differential coupling and compounding drive and transmission system comprises: an internal combustion engine acting as a primary source of rotary power; a pair of driven wheels which constitute front wheels of a vehicle; a gearbox and transmission device disposed relatively behind the engine for transmitting power from the engine to the pair of front wheels and to a rear rotary drive output; a central transmission shaft connected to the rear drive output of the gearbox and transmission device, the shaft extending rearwardly to transmit rotary power rearwards from the gearbox and transmission device; a rear differential connected to the central transmission shaft which serves to transmit drive to a pair of rear driven wheels, and an electric motor which forms part of the transmission system such that it can act as a secondary source of rotary power for driving a vehicle;
characterised in that the electric motor drives the rear differential, by a controllable clutch disposed between the ends of the central transmission shaft so as to control the transmission of power to the rear differential from the internal combustion engine and to control transmission of rotary power generated by the electric motor from the rear differential to the pair of front wheels;
in that the rear differential includes a pinion gear which receives drive from the central shaft, a big gear which is matched with and is driven by the pinion gear, two differential gears which are carried by the big gear and which themselves drive each of the rear driven wheels, and a further pinion gear matched with and driveable with the big gear, the further pinion gear being connected to the electric motor, by a central control unit, comprising a dynamo and a solid state electronic element, which controls the operation of the electric motor as a motor, as a generator, or in idling operation on the basis of the engine throttle position and the speed of the engine, and which controls the clutch, and
in that the system operates in the following modes:
   - the engine drives the front wheels only, the clutch being disengaged;
   - the engine drives both the front wheels and the rear differential together, the clutch being engaged;
   - the electric motor and the engine drive the front and the rear wheels together, the clutch being engaged;
   - the electric motor drives the rear differential alone, the clutch being disengaged,
   - the electric motor alone drives the front wheels and the rear differential together, the clutch being engaged,
   - the electric motor operates as a generator whereby rotary drive received by the rear differential is conveyed to the electric motor which generates electric current.

According to a second aspect of the invention, a differential coupling and compounding drive and transmission system comprises: a differential coupling and compounding drive and transmission system comprising: an internal combustion engine acting as a primary source of rotary power; a pair of driven wheels which constitute front wheels of a vehicle; a gearbox and transmission device disposed relatively behind the engine for transmitting power from the engine to the pair of front wheels and to a rear rotary drive output; a central transmission shaft connected to the rear drive output of the gearbox and transmission device, the shaft extending rearwardly to transmit rotary power rearwards from the gearbox and transmission device, and a rear differential connected to the central transmission shaft which serves to transmit drive to a pair of rear driven wheels, an electric motor which forms part of the transmission system such that it operates as a secondary source of rotary power for driving a vehicle;
characterised in that the motor comprises a rotor which includes the central transmission shaft, magnetic field windings disposed around the rotor, the field windings being rotatable about the rotor, a clutch disposed between the rotor and the field windings to selectively lock them to rotate together or unlock them from each other, by a brake selectively operable between the central shaft and a fixed casing, and by a central control unit which controls the operation of the brake and the clutch and which operates the motor as a motor or generator, the system being operable in at least some of the following modes:
   - the engine drives the front wheels and the motor idles;
   - the engine alone drives the rear wheels and the electric motor operates as a generator;
the engine drives the front and rear wheels together, and the electric motor together, and the electric motor operates as a generator to assist the driving;
   - the electric motor drives both front and rear wheels, the clutch being engaged;
   - the internal combustion engine drives the front and rear wheels together, and the clutch is closed;
   - the internal combustion engine drives the rear wheels alone, and the clutch is closed;
   - the electric motor operates as a motor, the electric motor and the internal combustion engine generate the driving power simultaneously;
   - the electric motor drives the rear wheels alone, the brake is locked, the clutch is open, thy gearbox driving the front wheels idles.

### BRIEF DESCRIPTION OF THE DRAWING

FIG 1 is an embodiment of the differential coupling and compounding drive and transmission system.
FIG 2 is another embodiment of the differential coupling and compounding drive and transmission system.
FIG 3 is an embodiment of the differential used in the differential coupling and compounding drive and transmission system;
FIG 4 is an embodiment of a differential of the differential coupling and compounding drive and transmission system which can drive an engine through a load control value-gaining torsional force of an auxiliary dynamo.
FIG 4A is a modified version of the differential shown in FIG 4, of which its rear end load is provided for driving a solely output shaft.

### DETAILED DESCRIPTION OF THE INVENTION

In recent years, energy and noise pollution has become more serious than before power driven vehicles. In view of the research and development on power driven vehicles, not much has been done because the capacity of the battery is limited. If the volume of the battery is increased to overcome the limits, more power will be wasted because the weight of the vehicle will be increased, too. It is not economic, so when the technological problems are not solved, the more practical way to drive vehicles is by multiple or compound driving devices as follows:

### (A) Many kinds of power are used:

The most typical kind of electric automobile is the one which uses its engine to drive the generator to produce power for its battery and then the battery supplies power to drive the motor for a car. However, this kind of car is not efficient enough, such as the American GM HX 3 car;

### (B) Coaxial type:

This kind of car uses the power output shaft of the engine to connect to the rotating shaft of driving motor means of the clutch series so as to drive the car and control its speed, such as the German VW CHICO car.

Besides, only either the above-mentioned engine or motor in (B) can be chosen to output driving so their power cannot be added to each other.

The present invention is a differential coupling and compounding drive and transmission system which uses the output shaft of an engine (or other rotary power source) connected with an electric motor.

This kind of device can all add the engine output and electric motor output together, and the adding process will not be affected by the speed relationship between them. So the volume of this system can be smaller, it becomes compact, and its costs is reduced. It can be controlled by a control device and it can have the driving function of an electric motor when the current is input. It is also used to generate power and output power and produce the transmission coupling function through coupling torsional moment of output current, or to start an engine and to brake the reproducing power, especially to charge the battery through the turning speed difference between the rotary magnetic field windings and rotor when the engine is individually driving. To control the charging current, it can get the turning speed difference between current adjustment and loading. The engine can be run at constant speed or partially modulated in speed so as to keep a higher speed and lower pollusion work speed and the electric motor produces differential speed output; that is, it can be provided with a charging power for a battery and a transmission coupling to improve the engines efficiency and reduce the pollution. Rather, it can also be used as a driving motor sole for a rotary output driving load or used together with the engine for a rotary driving load.

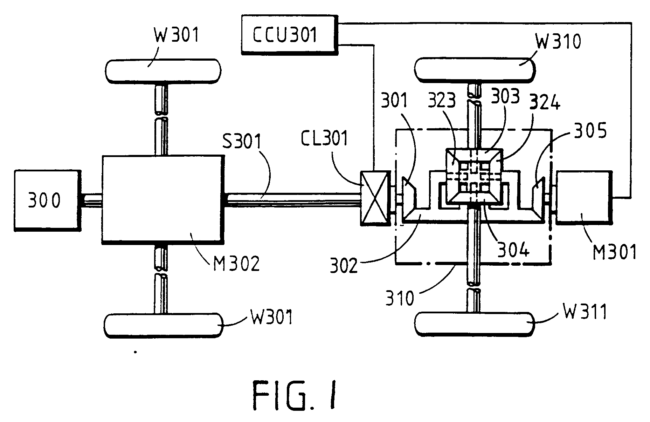

FIG 1 is an embodiment of the differential coupling and compounding power system of electric transmission storing type which is in cascade load.

FIG 1 can be mainly illustrated as follows:
- primary side rotary power unit 300: it is an internal combustion engine;
- front end load W301 which are a pair of front driven wheels;
- central gear box and transmission device and mechanism M302 for interfacing with the front wheels W301 (including automatic or manual gear control system of traditional front wheel transmission). In addition to driving the front wheels, it has a backward extending unit or central shaft S301 which has an output rotating member of the front wheels with an adequate rotating speed. The central shaft S301 includes a controllable clutch CL 301 fitted between the a central shaft and the rear end differential gear box so as to transmit the primary rotary motive force to a rear differential, or to transmit motive force from the rear differential to the front wheels, or to make the two motive forces transmitted to each other. The clutch is a manual, fluid, mechanical, controllable one, or a electrically controlled magnetic one;
- rear end differential 310: a small pinion gear 301 receives the driving of a clutch and moves a matched big gear 302, which is connected with two differential gears 323,324, respectively driving two output gears 303, 403 and two loads W310, W311 moved by two output shafts; big gear 302 is matched with two small gears for two power sources, wherein the small pinion gear 301 via clutch CL 301 is led to the primary rotary power unit. A further small pinion gear 305 is coupled to the rear of the rear end differential 310, and is connected to a magnetic coupling driving device M301;
- magnetic coupling driving device M301 which is an electric motor comprised of AC or DC brush or brushless dynamo armature for driving a load via the further small pinion gear 305 driven and matched to the big gear 302 of the differential 310. If the motor chosen can change the mechanical feedback power into electric power as a kind of reproduced power, it can produce a damping by means of the reproduced power. This electric motor M301 has a characteristic that the smaller the load the higher the speed, a mechanical characteristic of series wound, or auxiliary multiple wound auxiliary dynamo, or a current value controlled (including constant current control) AC or DC brush or brushless dynamo so as to have a function of a control value increasing according to the load, so that the following F14 function and the primary side gyroscopic power source are driven together to increase the torsional moment for auxiliary driving;
- central control unit CCU301: it is comprised of a dynamo and a solid electronic element, it is a reference to a load state (eg fuel valve state) and a driving state (eg speed) of an operative order and primary rotary power source so as to control the electric motor as a generator, a motor, or to idle, and CCU301 controls the engagement or disengagement of the clutch CL301.

The system has the following functions in addition to the above-mentioned function:
F11: primary rotary power source directly drives the front wheels; at this time, the clutch CL301 is disengaged;
F12: primary rotary power source drives the front wheels and the rear differential at the same time; at this time, clutch CL301 is engaged;
F13: primary rotary power source only drives the rear differential; at this time, clutch CL301 is disengaged; and the gearbox and transmission device M302 is idle to the front wheels;
F14: electric motor M301 and primary rotary power source drive at the same time all the wheels: at this time, clutch CL301 is engaged;
F15: electric motor M301 drives the rear differential; at this time, clutch CL301 is disengaged;
F16: electric motor M301 drives the front wheels and the differential at the same time all the wheels; at this time, clutch CL301 is engaged:

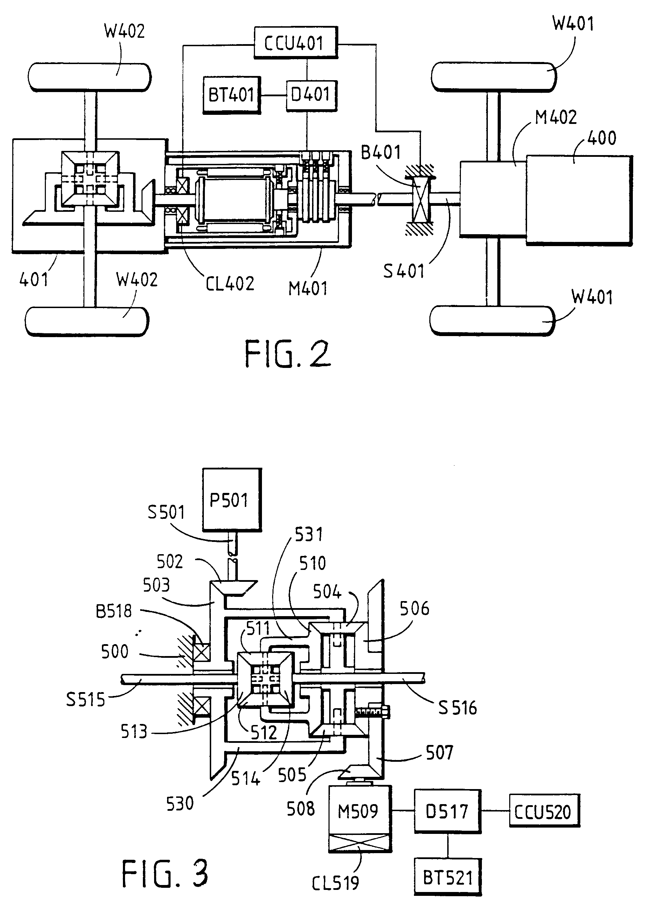

FIG 2 is another embodiment of the differential coupling and compounding drive and transmission system of electric transmission storing type which is in cascade load. Its primary rotary power source output drives the front end load which is a pair of front wheels is output to one of two end shafts of an electric motor. The other end of the electric motor is directly conducted to a rear end load through a transmission element, or through a differential to a load needed for differentiality (eg double unit rear wheels).

The embodiment in FIG 2 comprises:
- primary rotary power unit 400 which is an internal combustion engine;
- front end load W401 which is a pair of driven front wheels;
- central gear box and transmission device and mechanism M402 for interfacing with the front wheels W401 (including automatic or manual gear control system of traditional front wheel transmission). In addition to driving the front wheels, it has a backward extending unit or central shaft S401 which has an output rotating member of the front end load with an adequate rotating speed. The central shaft S401 includes a controllable clutch B401 fitted between the central shaft and the fixed case so as to be controlled by central control unit CCU401;
- electric motor M401: it is a double end shaft structure including a turnable magnetic field and a turnable rotor, which are respectively connected with a transmission central shaft and an input shaft of rear differential 401 so as to drive differential load on both sides; a clutch CL402 controlled by CCU401 is fitted between the turnable magnetic field and the turnable rotor, and it directly enables these two to have a mechanical lock at the same time; this device has a mechanical characteristic that the smaller the load the higher the speed, a mechanical characcteristic of series wound, or auxiliary multiple wound auxiliary dynamo, or a current value controlled AC or DC brush or brushless dynamo so as to have a function of a control value increasing according to the load, so that the following F14 function and the primary rotary power source are driven together to increase the torsional moment; it receives the control of the central control unit CCU401 so that it can control the electric motor to operate as a motor or dynamo; and the CCU401 outputs its control order to derive circuit device D401 according to its control order and the operative state of the primary rotary power unit 400.

The system has the following functions in addition to the above-mentioned function:
F21: primary rotary power source drives the front wheels; at this time; electric motor M401 is at break;
F22: primary rotary power source only drives the rear wheels; at this time electric motor M401 is in a state of generating power or clutch CL402 is engaged, and gearbox and transmission device M402 is idle;
F23: primary rotary power source drives the front and the rear wheels at the same time; at this time, electric motor M401 has power and acts as a motor;
F24: primary rotary power source only drives the rear wheels; at this time, electric motor M401 has power and acts as a motor; and brake B401 is engaged;
F25: electric motor M401 drives at the same time both the front and the rear wheels; at this time, the electric motor M401 has power and acts as a motor.

FIG3 is an embodiment of a rear differential which is suitable for use in the embodiment shown in Figure 1. It operates by means of series dual differential gears. It has a first differential gear moved by a input shaft and a second differential gear moved by an electric motor and it drives according to the total and difference between these two gears, and drives two output wheel and output shaft to issue differential output; it is comprised of:
- primary rotary power source P501: it is an internal combustion engine or to other rotary power source;
- input shaft S501: It provides a primary rotary power source and moves a small pinion gear 502 to move a big gear 503;
- big gear 503: It is driven by the small pinion gear 502 and it can move the frame 530 of the differential gear 504, 505 of the first differential gear system, and further move the differential gear 504, 505, and it can drive together with the second differential gear 506 according to the total and difference between these two gears;
   --the second differential gear 506: It combines the second input big gear 507 to match with the second input small gear 508, the second input small gear 508 receives the positive or negative rotating driving of the electric motor M509, or on the contrary, the input small gear 508 can move the electric motor M509 to act as a generator;
   --differential gear 510: It uses the frame 531 to move the differential gears 511, 512 of the second differential gear unit and then move the output differential gears 513, 514 and further move two output shaft S515, S516 so as to act differential output;
   --the electric motor M509: It has a trait that the smaller the load the higher the speed, a mechanic trait of series wound, or auxiliary multiple wound auxiliary dynamo, or a current value controlled (including constant current control) A.C. or D. C. brush or brushless dynamo so as to have a function of an increase of the torsional moment, it has a brake CL519 for an operation of locking or loosing;
   --Brake B518: it is provided at the static housing of the system and at the input end of the primary rotary power source, in the example, it is fitted between big gear 503 and the housing 500;
   --driving circuit D518: It can receive the order of CCU520 to control electric motor to act as a generator or a motor, or by means of controlling the output current value (including preset current) between the battery BT521 and the electric motor M509 to held drive the value-increasing torsional moment for the load, or by means of controlling the electric motor to charge current for the battery BT521 to make the electric motor M509 have a damping;
   --central control unit CCU520: it is comprised of a dynamo and a solid electronic element, it is a reference to a load state (e.g. oil valve state) and a driving state (e.g. speed) of an operative order and primary rotary power source so as to control electric motor as to a generator, a motor, or a break idle state;
   And CCU520 is secured to or loose to the clutch CL519 and brake B518 by a control, the situation of the control can be illustrated as follows:
      (1): electric motor drives the load or generates power to reproduce braking; at this time, brake B518 is close;
      (2): primary rotary power source drives the load; at this time, clutch CL301 is close;
      (3): primary rotary power source and the electric motor both drive at the same time all the load; at this time, brake B518 and clutch CL519 are loose;

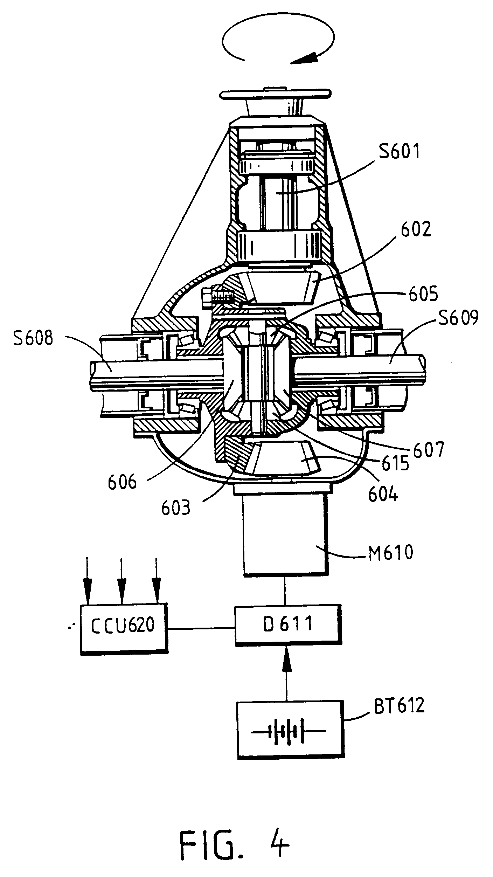

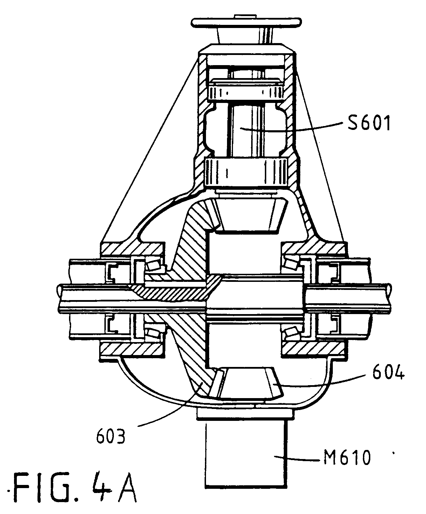

      FIG 4 is an embodiment of a differential suitable for use in the embodiment of Figure 1.

It can drive an engine power system through a load control value-gaining torsional force of an auxiliary dynamo. This embodiment has a characteristic that the smaller the load the higher the speed, a mechanical characteristic of series wound, or auxiliary multiple wound auxiliary dynamo, or a current value controlled (including constant current control) A.C. or D. C. brush or brushless dynamo so as to have a function of a control value increasing according to the load to have the function of increasing the torsional moment;

This system is comprised of the following:
--rotary power source: a power source from engine or other rotary power source, it has a clutch between the input shaft S601 and itself, or other transmission gear which should be in idle state;
--input shaft S601: It can receive the driving from engine or other rotary power source, and its small gear 602 is matched with the big gear 603;
--input big gear 603: It can connect and move two units of differential gear units 605, 615 and is matched with the second small gear 604 so as to help dynamo M610 to act power coupling;
--left side differential gear 606: It provides a drive left output shaft S608;
--right side differential gear 606: It provides a drive right output shaft S609;
--auxiliary dynamo/motor M610: It can receive the driving from the driver D611, the driver D611 is controlled by CCU620, it controls the following functions according to the driving operative situation (e.g. turning speed, fuel exhausted, and order value of the total driving need) of the primary side:
   (1) battery BT612 provides the power for motor output;
   (2) used as a generator to charge the battery;
   (3) idle;
      The auxiliary motor has a trait that the smaller the load the higher the speed, a mechanic trait of series wound, or auxiliary multiple wound auxiliary dynamo, or a current value controlled (including constant current control) A.C. or D. C. brush or brushless dynamo so as to have a function of a control value increasing according to the load to have the function of increasing the torsional moment;
--driver for dynamo driving D611: the driver D611 is controlled by CCU620 to control the control auxiliary dynamo, it is composed of a dynamo element or a solid elememt or both of them;
--CCU620: it sends the relative orders to the driver D611 according to the total system output operative orders and according to the primary side operative situation (e.g. turning speed, fuel exhausted, and order value of the total driving need);
--battery BT612: it is a battery which can charge or discharge power, it can be chosen from any kinds of charge/discharge secondary battery or fuel battery;
   By means of the above system, it becomes a useful, better and a more effective compound power system.
   In practical use, this dynamo can be coupled to the input big gear of the differential gear or coupled more adjacent to the engine primary side, and by means of the transmission element and primary side rotary shaft coupling, it can operate as follows:
--primary side is open (e.t. between input shaft, the clutch is loose or the opeartive transmission gear is idle), and uses power from battery to drive auxiliary dynamo for the motor driving load;
--when primary rotary power is input, it uses auxiliary dynamo to control the current and to adjust the auxiliary torsional moment of the priamry side;
--auxiliary dynamo is open and is driven and operated by the primary side;
   In addition, it can have the following functions: -when primary side is in light load input, or in need of reducing speed, the auxiliary dynamo is in a state of generating power to charge the battery and produce a damping.

If the rear end load side of this sysatem is driven by an output shaft, as shown in FIG 4A, an embodiment of the system in FIG 4 of which its rear end load side is provided for driving a soley output shaft, it is different from the FIG 4 because the input big gear 603 is directly connected to the input shaft S601 and the primary differential gear is omitted, and the auxiliary dynamo M610 still uses the second small gear 604 to match with the big gear 603.

## Claims

1. A differential coupling and compounding drive and transmission system comprising:
an internal combustion engine (300) acting as a primary source of rotary power;
a pair of driven wheels which constitute front wheels (W301) of a vehicle;
a gearbox and transmission device (M302) disposed relatively behind the engine (300) for transmitting power from the engine (300) to the pair of front wheels (W301) and to a rear rotary drive output;
a central transmission shaft (S301) connected to the rear drive output of the gearbox and transmission device (M302), the shaft (S301) extending rearwardly to transmit rotary power rearwards from the gearbox and transmission device (M302);
a rear differential (310) connected to the central transmission shaft (S301) which serves to transmit drive to a pair of rear driven wheels (W310,W311), and
an electric motor (M301) which forms part of the transmission system such that it can act as a secondary source of rotary power for driving a vehicle;
characterised in that the electric motor (M301) drives the rear differential (310),
by a controllable clutch (CL301) disposed between the ends of the central transmission shaft (S301) so as to control the transmission of power to the rear differential (310) from the internal combustion engine (300) and to control transmission of rotary power generated by the electric motor (M301) from the rear differential (310) to the pair of front wheels (W301),
in that the rear differential (310) includes a pinion gear (301) which receives drive from the central shaft (S301), a big gear (302) which is matched with and is driven by the pinion gear (301), two differential gears which are carried by the big gear (302) and which themselves drive each of the rear driven wheels (W310,W311), and a further pinion gear (305) matched with and driveable with the big gear (302), the further pinion gear (305) being connected to the electric motor (M301),
by a central control unit (CCU301), comprising a dynamo and a solid state electronic element, which controls the operation of the electric motor (M301) as a motor, as a generator, or in idling operation on the basis of the engine throttle position and the speed of the engine (300), and which controls the clutch (CL301), and
in that the system operates in the following modes:
- the engine (300) drives the front wheels (W301) only, the clutch (CL301) being disengaged;
- the engine (300) drives both the front wheels (W301) and the rear differential (310) together, the clutch (CL301) being engaged;
- the electric motor (M301) and the engine (300) drive the front and rear wheels (W301,W310,W311) together, the clutch (CL301) being engaged;
- the electric motor (M301) drives the rear differential (310) alone, the clutch (CL301) being disengaged,
- the electric motor (M301) alone drives the front wheels (W301) and the rear differential (310) together, the clutch (CL301) being engaged,
- the electric motor (M301) operates as a generator whereby rotary drive received by the rear differential (310) is conveyed to the electric motor (M301) which generates electric current.

2. A system according to claim 1, wherein the clutch (CL301) is a manual clutch.

3. A system according to claim 1, wherein the clutch (CL301) is a fluid clutch.

4. A system according to claim 1, wherein the clutch (CL301) is a mechanical clutch.

5. A system according to any one of claims 1 to 4, wherein the gearbox (M302) is a manual gearbox.

6. A system according to any one of claims 1 to 4, wherein the gearbox (M302) is an automatic gearbox.

7. A system according to any one of claims 1 to 6, wherein the electric motor (M300) is disposed relatively behind the rear differential (310).

8. A differential coupling and compounding drive and transmission system comprising:
an internal combustion engine (400) acting as a primary source of rotary power;
a pair of driven wheels which constitute front wheels of a vehicle (W401);
a gearbox and transmission device (M402) disposed relatively behind the engine (400) for transmitting power from the engine (400) to the pair of front wheels (W401) and to a rear rotary drive output;
a central transmission shaft (S401) connected to the rear drive output of the gearbox and transmission device (M402), the shaft (S401) extending rearwardly to transmit rotary power rearwards from the gearbox and transmission device (M402), and
a rear differential (401) connected to the central transmission shaft (S401) which serves to transmit drive to a pair of rear driven wheels (W402),
an electric motor (M401) which forms part of the transmission system such that it operates as a secondary source of rotary power for driving a vehicle;
characterised in that the motor (M401) comprises a rotor which includes the central transmission shaft (S401), magnetic field windings disposed around the rotor, the field windings being rotatable about the rotor, a clutch (CL402) disposed between the rotor and the field windings to selectively lock them to rotate together or unlock them from each other,
by a brake (B401) selectively operable between the central shaft (S401) and a fixed casing, and by a central control unit (CCU401) which controls the operation of the brake (B401) and the clutch (CL401) and which operates the motor (M401) as a motor or generator, the system being operable in at least some of the following modes:
- the engine (400) drives the front wheels (W401) and the motor (M401) idles;
- the engine (400) alone drives the rear wheels (W402) and the electric motor (M401) operates as a generator;
the engine (400) drives the front and rear wheels (W401,W402) together, and the electric motor (401) operates as a generator to assist the driving;
- the electric motor (M401) drives both front and rear wheels (W401, W402), the clutch (CL 402) being engaged;
- the internal combustion engine drives the front and rear wheels together, and the clutch (CL402) is closed;
- the internal combustion engine drives the rear wheels alone, and the clutch (CL402) is closed;
- the electric motor operates as a motor, the electric motor and the internal combustion engine generate the driving power simultaneously;
- the electric motor drives the rear wheels alone, the brake (B401) is locked, the clutch (CL402) is open, the gearbox (M402) driving the front wheels idles.

9. A system according to claim 8, wherein the central control unit (CCU401) controls the electric motor (M401) through a drive circuit device (D401).

10. A system according to claim 8 or 9, further comprising a battery (BT401) for driving the electric motor (M401), the battery being rechargeable by the electric motor (M401) when the motor operates as a generator.

11. A system according to any one of claims 8 to 10, wherein the electric motor (M401) includes a commutator and brush arrangement between a fixed mounting and the field windings.

12. A system according to claim 11 wherein the electric motor (M401) includes a second commutator and brush arrangement between the field windings and the rotor.

## Patentansprüche

1. Ein Differentialkupplungs-, Verbund-Antriebs- und Übertragungssystem, umfassend:
einen Verbrennungsmotor (300), der als primäre Quelle von Drehenergie dient;
ein Paar Antriebsräder, welche die Vorderräder (W301) eines Fahrzeuges bilden;
einen Getriebekasten und eine Übertragungavorrichtung (M302), angeordnet relativ hinter dem Motor (300) zur Übertragung von Kraft von dem Motor (300) zu dem Paar von Vorderrädern (W301) und zu einem rückwärtigen Drehantriebsausgang;
eine zentrale Transmissionwelle (S301), verbunden mit dem rückwärtigen Antriebs-Ausgang des Getriebekastens und der Transmissionsvorrichtung (M302), die Welle (S301) erstreckt sich nach rückwärts zur Übertragung von Rotationsenergie nach rückwärts von dem Getriebekasten und Transmissionsvorrichtung (M302);
ein rückwärtiges Differential (310), verbunden mit der zentralen Transmissionswelle (S301), welches dazu dient, Antrieb auf ein Paar rückwärtiger Antriebsräder (W310, W311) zu übertragen, und
ein Elektromotor (M301), der einen Teil des Transmissionssystems bildet derart, daß er als sekundäre Quelle von Drehenergie zum Antrieb eines Fahrzeuges wirkt;
dadurch gekennzeichnet, daß der Elektromotor (M301) das rückwärtige Differential (310) über eine steuerbare Kupplung (CL301) antreibt, die am Ende der zentralen Transmissionswelle (S301) angeordnet ist zur Steuerung der Übertragung von Kraft/Energie von dem Verbrennungsmotor (300) zu dem rückwärtigen Differential (310) und zur Steuerung der Übertragung von Drehenergie, die von dem Elektromotor (M301) generiert wurde, von dem rückwärtigen Differential (310) zu dem Paar von Vorderrädern (W301), daß das rückwärtige Differential (310) ein Ritzel (301) enthält, welches Antrieb von der zentralen Welle (S301) erhält, ein großes Zahnrad (302), welches eingreift in und angetrieben ist von dem Ritzel (301), zwei Differential-Zahnräder, die getragen sind von dem großen Zahnrad (302) und die selbst jeweils jedes bzw. je eines der rückwärtigen Antriebsräder (W310,W311) antreiben, und ein weiteres Ritzel (305), welches eingreift in und angetrieben ist von dem großen Zahnrad (302), das weitere Ritzel (305) ist verbunden mit dem Elektromotor (M301),
eine zentrale Steuereinheit (CCU301), umfassend einen Dynamo und eine integrierte Halbleiterschaltung, welche den Elektromotor (M301) steuert als Motor, als ein Generator oder im Leerlauf, auf der Basis der Drossel-Stellung der Maschine und der Geschwindigkeit des Motors (300), und welches die Kupplung (CL301) steuert, und
daß das System in den folgenden Modi bzw. Betriebsarten arbeitet:
- der Verbrennungsmotor (300) treibt nur die Vorderräder (W301), die Kupplung (CL301) ist ausgerückt;
- der Verbrennungsmotor (300) treibt sowohl die Vorderräder (W301) und das rückwärtige Differential (310) zusammen, die Kupplung (CL301) ist eingerückt;
- der Elektromotor (M301) und der Verbrennungsmotor (300) treiben gemeinsam die Vorder- und Hinterräder (W301,W310, W311) an, die Kupplung (CL301) ist eingelegt;
- der Elektromotor (M301) treibt nur das Differential (310), die Kupplung (CL301) ist ausgerückt,
- der Elektromotor (M301) allein treibt die Vorderräder (W301) und das rückwärtige Differential (310) an, die Kupplung (CL301) ist eingelegt,
- der Elektromotor (M301) arbeitet als Generator, wobei Drehantriebsenergie von dem Differential (310) übertragen wird auf den Elektromotor (M301), der elektrischen Strom generiert.

2. Ein System nach Anspruch 1, wobei die Kupplung (CL301) eine manuelle Kupplung ist.

3. Ein System nach Anspruch 1, wobei dei Kupplung (CL301) eine Fluid-Kuppung ist.

4. Ein System nach Anspruch 1, wobei die Kupplung (CL301) eine mechanische Kupplung ist.

5. Ein System nach einem der Ansprüche 1 bis 4, wobei das Getriebe (M302) ein manuelles Getriebe ist.

6. Ein System nach einem der Ansprüche 1 bis 4, wobei das Getriebe (M302) ein automatisches Getriebe ist.

7. Ein System nach einem der Ansprüche 1 bis 6, wobei der Elektromotor (M300) relativ hinter dem rückwärtigen Differential (310) angeordnet ist.

8. Eine Differentialkupplung und Verbund-Antrieb und Übertragungssystem, umfassend:
einen Verbrennungsmotor (400), der als primäre Quelle von Drehenergie dient;
ein Paar Antriebsräder, welche die Vorderräder (W401) eines Fahrzeuges bilden;
einen Getriebekasten und eine Übertragungsvorrichtung (M402), angeordnet relativ hinter dem Motor (400) zur Übertragung von Kraft von dem Motor (400) zu dem Paar von Vorderrädern (W401) und zu einem rückwärtigen Drehantriebsausgang;
eine zentrale Transmissionwelle (S401), verbunden mit dem rückwärtigen Antriebs-Ausgang des Getriebekastens und der Transmissionsvorrichtung (M402), die Welle (S401) erstreckt sich nach rückwärts zur Übertragung von Rotationsenergie nach rückwärts von dem Getriebekasten und Transmissionsvorrichtung (M402); und
ein rückwärtiges Differential (401), verbunden mit der zentralen Transmissionswelle (S401), welches dazu dient, Antrieb auf ein Paar rückwärtiger Antriebsräder (W402) zu übertragen,
ein Elektromotor (M401), der einen Teil des Transmissionssystems bildet derart, daß er als sekundäre Quelle von Drehenergie zum Antrieb eines Fahrzeuges wirkt;
dadurch gekennzeichnet, daß der Motor (M401) einen Rotor aufweist, der die zentrale Tansmissionswelle (S401) einschließt (bzw. auf dieser sitzt), magnetische Feldwindungen sind um den Rotor vorgesehen, die Feldwindungen sind drehbar um den Rotor, eine Kupplung (CL402) ist angeordnet zwischen dem Rotor und den Feldwindungen, um sie miteinander zu verriegeln zur gemeinsamen Rotation, oder sie voneinander zu entriegeln,
eine Bremse (B401) ist wahlweise betätigbar zwischen der zentralen Welle (S401) und einem festen Gehäuse, und durch eine zentrale Steuereinheit (CCU401), welche die Bremse (B401) und die Kupplung (CL401) steuert und den Motor (M401) als Motor oder als Generator betreibt, wobei das System in wenigstens einer der folgenden Betriebsarten arbeiten kann:
- die Maschine (400) treibt die Vorderräder (W401) und der Motor (M401) läuft leer;
- die Maschine (400) allein treibt die Hinterräder (W402), und der Elektromotor (M401) arbeitet als Generator;
- die Maschine (400) treibt die Vorder- und Hinterräder (W410, W402) gemeinsam, und der Elektromotor (401) arbeitet als Generator zur Unterstützung des Antriebs;
- der Elektromotor (M401) treibt sowohl Vorder- wie Hinterräder (W410, W402), die Kuppplung (CL402) ist eingerückt;
- die Verbrennungsmaschine treibt die Vorderräder und Hinterräder zusammen und die Kupplung (CL402) ist geschlossen;
- die Verbrennungsmaschine treibt die Hinterräder allein, und die Kupplung (CL402) ist geschlossen;
- der Elektromotor arbeitet als Motor, der Elektromotor und der Verbrennungsmotor erzeugen die Antriebsenergie gleichzeitig;
- der Elektromotor treibt die Hinterräder alleine, die Bremse (B401) ist festgelegt, die Kupplung (CL402) ist offen, das Getriebe (M402) der Vorderräder läuft leer.

9. Ein System nach Anspruch 8, wobei die zentrale Steuereinheit (CCU401) den Elektromotor (M401) über eine Antriebskreis-Vorrichtung (D401) steuert.

10. Ein Sysem nach Anspruch 8 oder 9, weiter umfassend eine Batterie (BT401) zum Antrieb des Elektromotors (M401), die Batterie ist wiederaufladbar durch den Elektromotor (M401), wenn der Motor als Generator arbeitet.

11. Ein System nach einem der Ansprüche 8 bis 10, wobei der Elektromotor (M401) einen Kommutator und eine Bürsten-Anordnung zwischen einer festen Halterung und den Feldwindungen aufweist.

12. Ein System nach Anspruch 11, wobei der Elektromotor (M401) einen zweiten Kommutator und Bürstenanordnung zwischen Feldwindungen und Rotor aufweist.

## Revendications

1. Système différentiel de couplage, d'entraînement compound et de transmission comprenant:
- un moteur à combustion interne (300) se comportant comme une source primaire de puissance de rotation;
- une paire de roues motrices qui constituent les roues avant (W301) d'un véhicule;
- un dispositif (M302) de boîte de vitesse et de transmission situé derrière le moteur (300) servant à transmettre la puissance du moteur (300) à la paire de roues avant (W301) et à une sortie arrière d'entraînement en rotation;
- un arbre de transmission central (S301) relié à la sortie arrière d'entraînement du dispositif (M302) de boîte de vitesse et de transmission, l'arbre (S301) s'étendant vers l'arrière afin de transmettre la puissance de rotation du dispositif (M302) de boîte de vitesse et de transmission vers l'arrière;
- un différentiel arrière (310) relié à l'arbre de transmission central (S301) servant à transmettre l'entraînement à une paire de roues motrices arrière (W310, W311), et
- un moteur électrique (M301) faisant partie du système de transmission tel qu'il peut se comporter comme une source secondaire de puissance de rotation pour entraîner un véhicule;
caractérisé
. en ce que le moteur électrique (M301) entraîne le différentiel arrière (310),
. en ce qu'il comporte un embrayage commandé (CL301) situé entre les extrémités de l'arbre de transmission central(S301) de façon à commander la transmission de la puissance du moteur à combustion interne (300) au différentiel arrière (310) et à commander la transmission de la puissance de rotation générée par le moteur électrique (M301) du différentiel arrière (310) à la paire de roues avant (W301),
. système dans lequel le différentiel arrière (310) comprend un engrenage à pignons (301) qui est entraîné par l'arbre central (S301), un grand engrenage (302) en prise avec et entraîné par l'engrenage à pignons (301), deux engrenages différentiels supportés par le grand engrenage (302) et qui eux-mêmes entraînent chacune des roues motrices arrière (W310, W311), et un engrenage supplémentaire à pignons (305) en prise et entraînable avec le grand engrenage (302), l'engrenage supplémentaire à pignons (305) étant relié au moteur électrique (M301),
. en ce qu'il comporte une unité centrale de contrôle (CCU301), comprenant une dynamo et un élément électronique à semi-conducteur, qui contrôle le fonctionnement du moteur électrique (M301) en tant que moteur, en tant que générateur, ou son fonctionnement au repos en fonction de la position du papillon du moteur et de la vitesse du moteur (300), et qui contrôle l'embrayage (CL301), et
. dans lequel le système fonctionne selon les modes suivants:
- le moteur (300) entraîne les roues avant (W301) seulement, l'embrayage (CL301) étant désaccouplé;
- le moteur (300) entraîne à la fois les roues avant (W301) et le différentiel arrière (310), l'embrayage (CL301) étant engagé;
- le moteur électrique (M301) et le moteur (300) entraînent les roues avant et arrière(W301, W310, W311) ensemble, l'embrayage (CL301) étant accouplé;
- le moteur électrique(M301) entraîne seulement le différentiel arrière (310), l'embrayage (CL301) étant désaccouplé;
- le moteur électrique (M301) seul entraîne à la fois les roues avant (W301) et le différentiel arrière (310), l'embrayage (CL301) étant accouplé;
- le moteur électrique (M301) fonctionne comme un générateur dans lequel l'entraînement en rotation reçu par le différentiel arrière (310) est transmis au moteur électrique (M301) qui génère du courant électrique.

2. Système selon la revendication 1, dans lequel l'embrayage (CL301) est un embrayage manuel.

3. Système selon la revendication 1, dans lequel l'embrayage (CL301) est un embrayage hydraulique.

4. Système selon la revendication 1, dans lequel l'embrayage (CL301) est un embrayage mécanique.

5. Système selon l'une quelconque des revendications 1 à 4, dans lequel la boîte de vitesse (M302) est une boîte de vitesse manuelle.

6. Système selon l'une quelconque des revendications 1 à 4, dans lequel la boîte de vitesse (M302) est une boîte de vitesse automatique.

7. Système selon l'une quelconque des revendications 1 à 6, dans lequel le moteur électrique (M300) est situé à l'arrière du différentiel arrière (310).

8. Système différentiel de couplage, d'entraînement compound et de transmission comprenant:
- un moteur à combustion interne (400) se comportant comme une source primaire de puissance de rotation;
- une paire de roues motrices qui constituent les roues avant (W401) d'un véhicule;
- un dispositif (M402) de boîte de vitesse et de transmission situé derrière le moteur (400) servant à transmettre la puissance du moteur (400) à la paire de roues avant (W401) et à une sortie arrière d'entraînement en rotation;
- un arbre de transmission central (S401) relié à la sortie arrière d'entraînement du dispositif (M402) de boîte de vitesse et de transmission, l'arbre (S401) s'étendant vers l'arrière afin de transmettre la puissance de rotation du dispositif (M402) de boîte de vitesse et de transmission vers l'arrière, et
- un différentiel arrière (401) relié à l'arbre de transmission central (S401) servant à transmettre l'entraînement à une paire de roues motrices arrière (W402),
- un moteur électrique (M401) faisant partie du système de transmission tel qu'il peut se comporter comme une source secondaire de puissance de rotation pour entraîner un véhicule;
caractérisé
. en ce que le moteur électrique (M401) comporte un rotor qui comprend l'arbre de transmission central (S401), des enroulements générateurs de champ magnétique étant disposés autour du rotor, les enroulements générateurs de champ pouvant tourner autour du rotor, un embrayage (CL402) situé entre le rotor et les enroulements afin de pouvoir sélectivement les rendre solidaires pour qu'ils tournent ensemble ou les désolidariser l'un de l'autre,
. en ce qu'il comporte un frein (B401) actionnable sélectivement entre l'arbre central (S401) et un carter fixe, et une unité centrale de contrôle (CCU401) qui contrôle le fonctionnement du frein (B401) et de l'embrayage (CL402) et qui fait fonctionner le moteur électrique (M401) comme moteur ou comme générateur, le système étant commandé en fonctionnement au moins selon certains des modes suivants:
- le moteur (400) entraîne les roues avant (W401) et le moteur électrique (M401) est au repos;
- le moteur (400) seul entraîne les roues arrière (W402) et le moteur électrique (M401) fonctionne comme un générateur;
- le moteur (400) entraîne les roues avant et arrière (W401, W402) ensemble et le moteur électrique (M401) fonctionne comme un générateur pour faciliter la conduite;
- le moteur électrique (M401) entraîne à la fois les roues avant et arrière (W401, W402), l'embrayage (CL402) étant accouplé;
- le moteur à combustion interne entraîne les roues avant et arrière ensemble, et l'embrayage (CL402) est fermé;
- le moteur à combustion interne entraîne seulement les roues arrière, et l'embrayage (CL402) est fermé;
- le moteur électrique fonctionne comme un moteur, le moteur électrique et le moteur à combustion interne produisent simultanément la puissance d'entraînement;
- le moteur électrique entraîne seulement les roues arrière, le frein (B401) est bloqué, l'embrayage (CL402) est ouvert, la boîte de vitesse (M402) entraînant au ralenti les roues avant.

9. Système selon la revendication 8, dans lequel l'unité centrale de contrôle (CCU401) contrôle le moteur électrique (M401) à l'aide d'un dispositif de circuit d'entraînement (D401).

10. Système selon la revendication 8 ou 9, comprenant en outre une batterie (BT401) pour entraîner le moteur électrique (M401), la batterie étant rechargeable par le moteur électrique (M401) lorsque le moteur fonctionne comme un générateur.

11. Système selon l'une quelconque des revendications 8 à 10, dans lequel le moteur électrique (M401) comporte un commutateur et un ensemble de balais entre un support fixe et les enroulements générateurs de champ.

12. Système selon la revendication 11, dans lequel le moteur électrique (M401) comporte un second commutateur et un second ensemble de balais entre les enroulements générateurs de champ et le rotor.
